**Europäisches Patentamt**

**European Patent Office**

**Office européen des brevets**

(19)

(11) Publication number: **0 113 649**
**A1**

(12) **EUROPEAN PATENT APPLICATION**

(21) Application number: **83850325.8**

(22) Date of filing: **05.12.83**

(51) Int. Cl.³: **C 22 B 3/00**
**C 22 B 11/04, C 22 B 13/04**

(30) Priority: **09.12.82 SE 8207053**

(43) Date of publication of application:
**18.07.84 Bulletin 84/29**

(84) Designated Contracting States:
**AT BE DE FR GB IT**

(71) Applicant: **Boliden Aktiebolag**
**Box 5508**
**S-114 85 Stockholm(SE)**

(72) Inventor: **Miöen, Thomas Konrad**
**Karlavägen 64**
**S-114 49 Stockholm(SE)**

(74) Representative: **Lundin, Björn-Eric et al,**
**Boliden Aktiebolag Box 5508**
**S-114 85 Stockholm(SE)**

(54) **A method for working-up complex sulphidic ore concentrates.**

(57) The invention relates to a method for selectively recovering the metal values of polymetallic sulphidic ore concentates that contain lead and/or gold and other precious metals. The concentrate is treated in the following combination of process stages:

a) roasting (2) under magnetite yielding conditions

b) sulphating (4) in an oxidising environment to convert non-ferrous metals to sulphate and/or oxysulphate form;

c) leaching (5) in water or a weak aqueous solution of sulphuric acid to recover any copper, nickel, cobalt, zinc, uranium and molybdenum present, and at least part of the silver present;

d) treating (10) the leaching residue from stage c), for example, by leaching in a solution of chloride of an alkali metal or an earth metal, or smelting said residue while slagging any iron content therein to recover the lead content and any silver remaining.

EP 0 113 649 A1

Croydon Printing Company Ltd.

./...

COMPLEX CONCENTRATE

ARSENIC MERCURY

AGGLOMERATION — 1

AIR

GAS CLEANSING — 3

ROASTING — 2    SULPHURIC ACID
ZINC SULPHATE

SULPHURIC ACID

SULPHATING (OXIDIZING) — 4    SULPHURIC ACID

AIR

SULPHURIC ACID
ZINC SULPHATE

5    LEACHING I

SEPARATION — 7    SILVER
COPPER

SULPHATE SOLUTION

6    FILTRATION

ELECTROLYSIS — 8  9

ZINC

LEACHING RESIDUE

10 — LEACHING II    LEAD
GOLD
SILVER

IRON OXIDE

CRUDE IRON    DUMPING

-1-

# A METHOD FOR WORKING-UP COMPLEX SULPHIDIC ORE CONCENTRATES

The present invention relates to a method for selectively recovering the metal content of polymetallic sulphidic ore concentrates that contain lead and/or gold and at least one of the elements copper, nickel, cobalt, zinc, uranium, molybdenum, iron and silver. Metals of a more noble character than silver are included in addition to gold.

Those ore concentrates which can be worked-up to advantage in accordance with the invention may be of the type polymetallic residual concentrates or pyrites occurring when processing or dressing complex sulphide ores to obtain pure copper concentrates, zinc concentrates, lead concentrates and/or pyrite concentrates, or also different kinds of so-called bulk concentrates. A common feature of bulk concentrates is that the non-ferrous metal contents can be extremely low, for example 5% or less, which is particularly the case with Spanish pyrites and residual concentrates. The lead content of bulk concentrates is often low, while the copper and/or zinc contents are considerably higher.

Although when practicing the method according to the invention there is no critical upper limit with respect to the amount of, for example, lead, copper, zinc, silver and gold present in the concentrates, the lead content is restricted to about 20%, for practical reasons. This lead content of the concentrate can be exceeded, however, when necessary. By admixing with the concentrate a material less rich in lead, for example, inert material or concentrates containing less lead, the lead content can be lowered so that the charge entering the first stage of the process will contain at most approximately 20% lead.

In addition, concentrates of the aforementioned kinds are often contaminated with such elements as arsenic, antimony, bismuth and mercury. These elements give rise to problems of a technical and environmental nature, when present in the conventional smelting processes.

At present there are no attractive methods by which concentrates of the kind mentioned in the introduction can be directly worked-up into valuable metal products.

It is usual to further concentrate the bulk concentrates, although in this respect it is practically impossible to obtain copper and/or zinc concentrates which are free from lead. Consequently, the copper and zinc smelters handling these concentrates encounter both technical and environmental problems, while the value of the lead content of the concentrates is often lost. Part of the value of the copper, zinc and silver present is also often lost, when selectively dividing up the bulk concentrate.

It has been proposed to selectively leach-out the lead content of the bulk concentrate with the aid of an oxidising leaching agent, such as $FeCl_3$, thereby enabling the lead content to be recovered, while improving conditions for the further dressing of the residual bulk concentrate. As far as we know, however, these proposals have not resulted in a successful technical process. The disadvantages with such a process are that large quantities of concentrate must be leached, and that during leaching it is difficult to prevent zinc from also passing into solution. The leaching liquors used must be oxidised before they can be re-used.

The leaching of sulphidic ore with an oxidative chloride solution, comprising $FeCl_3$ and/or $CuCl_2$, was suggested as early as the 19th century. Tests in accordance with these proposals have been carried out in various parts of the world during the 1960s and 1970s. It has also been proposed to leach both pure copper concentrates and lead concentrates, and bulk concentrates containing copper, zinc and lead.

The proposed sulphide leaching processes are encumbered with disadvantages, among which can be mentioned:

- the resultant leaching solution becomes extremely complex and it is difficult to separate out the various metals contained therein, while lead, copper, zinc and silver pass into solution.

- the iron content of the concentrates is leached out and must then be precipitated as jarosite, goethite or ferri-hydroxide, which requires the addition of chemicals and creates dumping problems.

- subsequent to the leaching process, the iron chloride exists as $FeCl_2$ and the copper chloride, if such is used, as CuCl. These must be oxidised to $FeCl_3$ and $CuCl_2$ respectively, in order for them to be re-used in the leaching process.

- the copper and zinc present in the concentrate appears in the form of chlorides. These must be converted to sulphates, in order to enable a well established reduction technique (electrolysis) to be used.

- the processes are not suitable for application in connection with concentrates which contain such impurities as mercury/arsenic antimony and bismuth, and neither are they suitable in respect of concentrates containing precious metals.

Thus, despite rigorous efforts, no process has been developed that is able to replace the conventional smelting processes for the type of complex sulphidic materials in question, for example, bulk concentrates containing lead, copper and zinc. As before-indicated, neither are such pyrometallurgical processes sufficiently attractive with respect to those requirements placed at present on productivity, yield and environment.

Since the 19th century, pyrites or concentrates containing copper, zinc and lead in amounts beneath 5% have been treated on a large industrial scale by first roasting the material, and then subjecting the so-called pyrite cinders to a chlorinating roasting process. In this way it has been possible to leach out the copper, zinc and lead content, whereafter the resultant iron oxide has been used as a raw material for manufacturing raw iron in blast furnaces. The procedures of concentrating the leaching solution and separating the metals one from the other are, however, both complicated and unhygienic from a handling aspect.

Thus, the process in its entirety is both costly and detrimental to the environment. Consequently, the factories and plants intended for such processes have been closed down one after the other.

The method according to the invention eliminates all the disadvantages and difficulties encountered with hitherto known processes referred to in the intro-duction, and the object of the invention is to afford a technically and environmentally attractive process for working-up complex, lead-containing sulphidic concentrates for selectively recovering the metal content thereof.

To this end, the method is characterised by the combination of process steps set forth in the following claims.

Thus, the complex concentrate is treated in a multistage process, incorporating roasting, sulphating, water-leaching or sulphuric-acid leaching (leaching stage I) and chloride leaching (leaching stage II). In this respect, it has surprisingly been found that the lead content of the concentrate remains quantitatively in the material right up to leaching stage II, and that, in doing so, has not been found to disturb other, preceding process stages. Thus, the yields of other metals recovered in previous stages were not found to be negatively affected in any way by the presence of the lead and/or the precious-metal content, and consequently, it has been found that the metals recovered in the preceding process stages can be recovered at extremely high yields. This means that the leaching residue obtained after leaching stage I can be considered as, and treated as a high-qualitative lead raw material and a precious-metal raw material respectively. In addition, it has been found that the elimination of such impurities as arsenic, antimony, bismuth, mercury and sulphur can take place during the roasting and sulphating stages, without interaction from other metal contents of the concentrate. When the concentrate has high input lead and/or precious-metal contents, it may be preferable, instead of leaching stage II, to separate and recover lead and/or precious metals from the leaching residue obtained in leaching stage I pyrometallurgically, by melting and reduction.

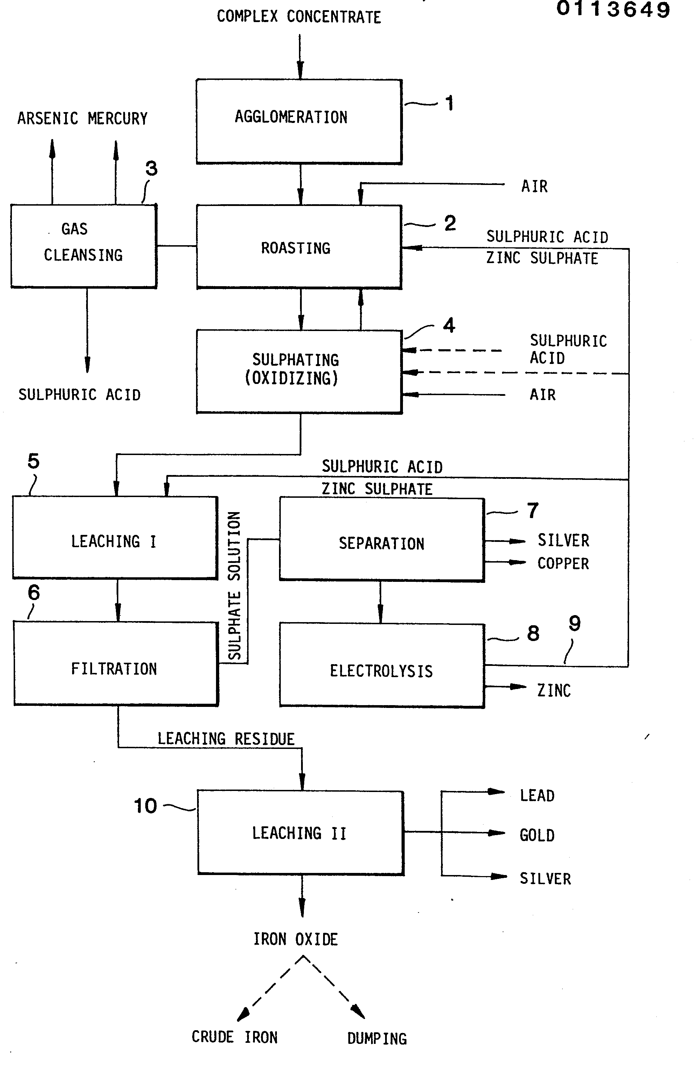

The method will now be described in more detail with reference to the accompanying drawing, the single Figure of which is a block schematic illustrating a preferred embodiment of the method according to the invention.

The complex concentrate which subsequent to the ore-dressing process is often extremely fine can be advantageously agglomerated in an apparatus 1 intended for micropelletizing or rolling the concentrate, for example, prior to charging the concentrate to the roasting stage II, as described in our earlier Patent Specification US-A 3856506, thereby avoiding the entrainment of dust to the greatest possible extent. The roasting process is a magnetite yielding process, and is carried out to advantage in accordance with the fluidised bed technique. By way of example of suitable roasting processes which can be also applied to the concentrates here in question, can be mentioned those processes described in our earlier Patent Specifications US-A 3 386 815 and DE,B,2000085.2.

Because the roasting process is a magnetite-yielding process, i.e. a process carried out with an air deficiency, so that the major part of the iron contained in the concentrate is converted to magnetite, $Fe_3O_4$, there is gained the advantage that such impurities as arsenic antimony bismuth and mercury can be fumed-off to a large extent, at the same time as the formation of not-readily leached and not readily split-off ferrites, with copper and zinc is avoided. The sulphur content, however, is oxidised and fumed-off as sulphur dioxide, while the fuming-off of lead is avoided, as is also sintering of the charge, even when employing relatively high roasting temperatures within the range 650-1000°C.

In this respect the roasting process is carried out so that the residual content of sulphide sulphur in the roasting material is at most 15%, although a residual content of about 5% is preferably selected.

The contents of the roaster gas, primarily arsenic and mercury, are removed therefrom in a gas-cleansing system 3, using known techniques. Suitable gas cleansing processes are described, for example, in our earlier Patent Specifications US,A 3 899 308 and 4 138 231.

The cinder is then transferred to a sulphating step 4, in which the cinder is sulphated in an oxidising environment while adding to said cinder a sulphur product - for example, $SO_2$, $SO_3$, sulphuric acid or a sulphide - in an amount such that the copper, zinc, lead and possibly silver contained by the concentrate are converted to sulphates or oxysulphates. The temperature during the sulphating and oxidising process of the sulphide sulphur is set between 600 and 1000°C, in a manner such that the iron is converted to not-readily leached hematite, $Fe_2O_3$, while copper, zinc and possibly any silver present are converted to readily-leached sulphates or oxysulphates. The lead content is also converted to sulphate form, although the lead sulphate differs from the other sulphates formed, insomuch as it is extremely difficult to leach out. Any mercury remaining from the roasting step 2 is practically quantitatively expelled during the sulphating step.

Suitable sulphating conditions are described, for example, in our earlier Patent Specifications CA,A 892 475 and US,A, 4 069 041. The sulphating agent used may be leaching liquid obtained from step 5, subsequent to recovering the metal content of the leaching liquid to the extent desired, although it is preferred to use a gaseous sulphating agent, for example, sulphur-trioxide,a sulphur-dioxide-air mixture or mixtures thereof. One such sulphating gas mixture can be produced by supplying sulphuric acid to the system, the acid being vapourised and mixed with hot air as it is introduced into the sulphating reactor.

The sulphated material is then transferred to a leaching stage I step 5, in which said material is leached with water or a weak sulphuric acid-water solution:   In this respect, the material can be leached in a plurality of part steps, with progressively increasing sulphuric-acid contents in the leaching solution; this progressive increase in the acid concentration can also be obtained by employing a continuous contraflow leaching process. During the leaching process, copper, zinc and metals are leached out from other readily-leached sulphates or oxysulphates. Lead and at least substantially all the iron content remains in the leaching residue. Depending upon the type of concentrate being treated and on the prevailing roasting and sulphating conditions, the major part of the silver can be leached out in this step or in leaching stage II in the second leaching step 10. The leaching residue is separated from the complex sulphate solution in a filter system 6.

The metals leached from the aforementioned sulphated product and contained in the resultant complex sulphate solution are recovered from said solution in a separation step 7, by employing a suitable technique, such as precipitation, cementation and/or liquid-extraction,for example. The precipitating agent used may be a sulphur-containing agent, for example sulphides such as hydrogen sulphide, sodium sulphide or such agents suitable for precipitating copper, zinc sulphide or sulphidic zinc concentrates. By cementation is meant here the precipitation of a metal onto a metal that is more electron-negative, for example cementation of copper with zinc powder, in this case, copper, zinc and silver can be separated from one another. The individual metals can then be recovered in a known manner by electrolysis of copper-sulphate solution or zinc-sulphate solution respectively in a step 8, or by concentrating the cement copper or cement silver in a smelter.

As before-mentioned, the sulphate solution depleted of metal in said process is recycled through a line 9,for re-use as a leaching solution and optionally also as a sulphating agent. Advantageously, surplus sulphate solution is recycled to the roasting step and is there incinerated while splitting-off the sulphate content, to form sulphur dioxide which accompanies the generated roaster gases to purification and the subsequent manufacture of sulphuric acid.

The technique to be used for recovering the metal content of the leaching solution depends upon which metals are present in the liquid, and the amounts in which they are present. When, for example, the concentrate is copper based, the first metal to be cemented out is suitably silver, using copper powder, whereafter the zinc is separated from the copper by crystallisation, VVX, i.e. a liquid ion-exchange, or by some precipitating process. The residual, pure copper-sulphate solution is electrolysed finally with lead anodes, whereupon copper metal and sulphuric acid are formed. Some of this sulphuric acid can be used in the leaching and sulphating steps, as before-indicated, while the remainder is split-off in the form of other sulphates in the solution, when returning to the roasting step.

When the concentrate is zinc based, silver is suitably cemented-out first, using zinc powder, whereafter the copper is separated by VVX or cemented-out with zinc powder. The residual, pure zinc-sulphate solution is electrolysed using lead anodes, whereupon zinc metal and sulphuric acid are formed. The sulphuric acid is utilised as above when treating copper-based concentrates.

The iron, lead and gold content of the concentrate, together with silver, if this has not been removed at the first leaching step 5, are found in the leaching residue from the first step 5.

The residue is then leached in a second leaching step 10, using a solution of calcium chloride under accurately established conditions with respect to concentration, temperature and a low pH, as described in the Norwegian Patent Specification No 8 781470 for concentrating ferrous waste-material of the type jarosite, or other residual materials obtained from hydrometallurgical zinc processes. In this case, lead and any silver remaining is leached-out at a yield of at least 95%, while iron and gold remain undissolved. Lead chloride can be recovered from the resultant chloride solution by means of known techniques, for example by cooling and crystallisation. Lead hydroxide or lead carbonate can be precipitated by adding lime or alkali, either to the original chloride solution or to the dissolved crystalised lead chloride. Lead hydroxide and lead carbonate can be converted to lead metal by calcination and a subsequent reduction. Lead metal separated from lead chloride can be produced by electrolysis in aqueous solution or in molten-salt bath, by reduction with hydrogen gas, for example in accordance with the method described in our previous PCT-application PCT/SE79/00199 published under WO 80/00852, or the lead chloride can also be converted to lead sulphate, which can be converted to lead metal in the electric furnaces available in the smelter, or in a so-called Kaldo furnace.

Sodium chloride or another alkali chloride or chlorides of an alkali earth metal other than calcium can be used in the second leaching stage instead of calcium chloride.

If gold is present in the concentrate and is to be recovered therefrom, chlorine gas must be injected while leaching with calcium chloride. A gold yield of about 97% can be obtained.

Thus, the method according to the invention also enables highly complex and contaminated lead-containing concentrates to be treated, while providing a high-lead yield. At the same time, high yields can be obtained of secondary products or contaminants, such as copper, zinc, gold silver, mercury, arsenic, antimony and bismuth. Lead is primarily recovered as lead chloride, through a leaching operation. During this leaching operation, the material undergoing leaching is greatly reduced quantitatively, owing to the fact that the sulphur, copper and zinc, in addition to arsenic, antimony, bismuth and mercury contained in the concentrate have already been recovered from the concentrate. The leaching agent need not be an oxidising agent, except when gold is present in the material to be leached, which facilitates regeneration and re-use of the leaching agent.

Iron oxides resulting from the chloride leaching process are dumped, or used in the manufacture of raw iron.

As before-indicated, leaching of the material with a chloride solution in the second leaching step, to recover lead and/or precious metals, can, in certain cases, be advantageously replaced by a process in which leaching residues from the leach stage I are concentrated pyrometallurgically. This may be of primary interest when the leaching residue contains comparatively large quantities of lead and/or precious metals. Whether the leaching residue is treated as a lead raw material or as a precious-metal raw material depends upon the amount of lead present in the leaching residue. When the leaching residue is considered to be a lead raw material, the residue is treated together with other lead raw materials in accordance with known techniques, in a lead manufacturing plant, by smelting down the residue, for example, in a Kaldo converter or an electric smelting furnace, there being obtained a lead bullion which contains precious metals. If the precious-metal content of the residue is of primary interest, the leaching residue is transferred as a smelting material to a copper smelter. Thus, by means of the afore-described process steps according to the invention, the original ore concentrate, which could not previously be worked in a lead manufacturing plant, has been converted to a lead raw material which fulfills the technical, economical and environmental requirements placed today on a lead smelter of the aforementioned kind.

When the lead and precious metal content of the leaching residue are comparatively low and unfavourable in relation to the iron content of the residue, it is possible, by means of a mineral dressing process, to separate the iron content of the leaching residue, from the lead and precious-metal content prior to concentrating the last mentioned in a lead smelter form of iorn oxides, magnetite and hematite.

Example

A complex sulphide concentrate, the main analysis values of which are set forth in Table III below, was roasted in agglomerated form in a fluidised bed furnace at a temperature of 800$^0$C while supplying 1.43 m$^3$ air per kg concentrate, corresponding to a stoichiometric air deficiency of 86%. The main analysis values of the roasted material are set forth in Table III.

The cinder was transferred to a sulphating reactor of fluidised-bed design. The cinder was held in the reactor for four hours. During this period, concentrated sulphuric acid was passed through a heated conduit to the wind box of the reactor, where the sulphuric acid was vapourised and mixed with air heated to a temperature of 800$^0$C, whereafter the gaseous mixture was used as a fluidising gas in the reactor. The bed was maintained at a temperature of 670$^0$C. Air was added in an amount of 13 m$^3$/h and sulphuric acid in an amount of 2.64 kg/h. The rate of gas flow was 0.27m/s (NTP).

The analysis values of the sulphated material are set forth in Table III.

The sulphated material was then leached in four steps. The leaching liquid used in the first three steps was diluted sulphuric acid, and the leaching process was carried out in accordance with Table I below.

## TABLE 1

| Leaching Step | $H_2SO_4$ conc. % | Temperature $^0$C | Leaching Time hours |
|---|---|---|---|
| 1 | 5 | 80 | 0.5 |
| 2 | 10 | 95 | 0.5 |
| 3 | 15 | 95 | 0.5 |

0113649

-15-

In each leaching step there was used 5 litres of leaching solution and about 2 litres of washing liquid per kg of ingoing material to be leached.

Materials leached in the third step were leached in a further step with an acid aqueous solution containing 2.5 mol/l $CaCl_2$ and with an addition of chlorine gas.

The leaching yield calculated as the accumulated yield after the various leaching steps are set forth in Table II below.

## Table II

| Leaching step | Yield % | | | | | |
|---|---|---|---|---|---|---|
| | Fe | Cu | Zn | Pb | Ag | Au |
| 1 | 2.9 | 88.0 | 85.9 | 0 | 6.6 | |
| 2 + 3 | 10.6 | 97.0 | 93.8 | 0.0 | 23.2 | |
| 4 | 16.3 | 97.4 | 94.3 | 97.4 | 86.1 | 97.6 |

The leaching residue obtained in leaching step 4 and comprising mainly iron oxide had the analysis values set forth in Table III below.

## Table III

Compilation of the analysis values
of the ingoing and outgoing materials.
Contents in percent by weight and g/t respectively.

| Element | Concentrate | Cinder | Sulphated Goods | Leaching residue after step 4 |
|---|---|---|---|---|
| Fe(%) | 24.9 | 31.3 | 19.7 | 51.5 |
| Cu(%) | 13.1 | 16.9 | 15.0 | 1.2 |
| Zn(%) | 10.9 | 13.3 | 9.6 | 1.7 |
| Pb(%) | 2.3 | 3.4 | 2.2 | 0.18 |
| S (%) | 31.7 | 5.7 | 10.3 | 0.0 |
| As(%) | 2.7 | 2.7 | 2.7 | 0.41 |
| Sb(%) | 0.6 | 0.41 | 0.46 | 0.76 |
| Hg(g/t) | 180 | 3.9 | 0.05 | C.0 |
| Ag(g/t) | 580 | 750 | 530 | 230 |
| Au(g/t) | 10 | 11 | 8.1 | 0.6 |
| $SiO_2$(%) | 5.0 | 5.4 | 4.1 | - |

A long series of tests of the kind illustrated in the Example but with variable air deficiencies and, inter alia with different residence times and temperatures with respect to the roasting process, showed that the expulsion of arsenic and antimony during the roasting process, the degree of which expulsion was relatively low in the illustrated example, can be greatly improved at longer residence times and greater air deficiencies. In cases such as these, however, it is necessary to take into account the fact that a certain amount of lead sulphide will also be fumed-off, although this amount also depends upon the amount of gas present. The lead sulphide fumed-off, however, can be recycled to the roasting process as sulphate or oxysulphate, or can be passed to the leaching stage II. Thus, the process can be modified with respect to the composition of the material to be worked-up and to the possibilities found in working-up lead dust. Consequently, if it is desired to expel large quantities of arsenic and antimony during the roasting process, said roasting process should be effected with an air deficiency corresponding at most to 85% of the stoichiometric requirement. If lead is to be driven-off in large quantities, a temperature in excess of $800°C$ is selected, and an air deficiency of beneath 90%.

Thus, the process according to the invention enables extremely high total yields to be obtained in respect of recoverable metals and further enables a high percentage of the impurities to be eliminated.

Between 70 and 95% of the arsenic and antimony present can be expelled in the roasting step. About 90% of the mercury present is volatilized during the roasting step, while the remainder can be expelled in the sulphating step. In respect of a series of tests carried out, the maximum yields in respect of copper were 98.6%, in respect of zinc 97.4%, in respect of lead 97.4%, in respect of silver 97.1%, and in respect of gold 98.3%.

CLAIMS

1. A method for selectively recovering metal values of a polymetallic sulphidic ore concertrate containing lead and/or gold and other precious metals, and at least one of the elements copper, nickel, cobalt, zinc, uranium, molybdenum, iron and silver, characterised by treating the concentrate in the following combination of process stages:

   a) roasting under magnetite-yielding conditions

   b) sulphating in an oxidising environment, while supplying a sulphating agent in an amount such, and at a temperature such that the non-ferrous metals contained in the concentrate are converted to sulphates and/or oxysulphates.

   c) leaching ir water or a weak aqueous solution of sulphuric acid to recover any copper, nickel, cobalt, zinc, uranium, molybdenum present in the concentrate and at least a part of the silver content thereof.

   d) leaching the leaching residue obtained from stage c) in a solution of chloride of an alkali or an earth-metal, to recover lead value and optionally any silver remaining.

2. A method according to claim 1, in which any gold or platinum-group metal present in the concentrate is to be recovered, characterised in that leaching in stage d) is carried out while supplying chloride gas to said stage.

3. A method according to Claim 1 or Claim 2, characterised in that the leaching solution from stage d) is cooled, to crystallize out lead chloride.

4. A method according to any one of claims 1-3, characterised in that the leaching solution from stage d) is admixed with a lime or an alkali to precipitate lead-hydroxide or lead carbonate.

5. A method according to claim 1, characterised in that the chloride used is calcium chloride.

6. A method for selectively recovering metal values of polymetallic sulphidic ore concentrates containing lead and/or gold and other precious metals, and at least one of the elements copper, nickel, cobalt, zinc, uranium, molybdenum, iron and silver, characterised by treating the concentrate in the following combination of process stages:

   a) roasting under magnetite high yielding conditions,

   b) sulphating in an oxidising environment while supplying sulphating agent in an amount such, and at a temperature such that the non-ferrous metal content of the concentrate is converted into sulphates and/or oxysulphates.

   c) leaching in water or a weak aqueous solution of sulphuric acid, to recover any copper, nickel, cobalt, zinc, uranium, and molybdenum present, and at least a part of the silver content

   d) smelting the leaching residue from stage a) while slagging the iron content, to recover the lead content and/or the precious metal content.

7. A method according to claim 6, in which a leaching residue having a substantial lead value is treated in stage d), characterised in that the smelting process is carried out while recovering a lead bullion that contains precious metal.

8. A method according to any one of claims 1-7, characterised in that a part of the leaching liquid from stage c) after recovering the metal value is returned as leaching liquid and optionally also as a sulphating agent.

9. A method according to claim 8, characterised in that residual leaching liquid from stage c) is returned to the roasting process in stage a), for incineration and for conversion of its sulphate content to sulphur dioxide.

10. A method according to any one of the preceding claims, characterised in that the leaching process in stage c) is carried out in the form of a contra-flow leaching process, either continuously or in a plurality of part stages with a progressively increasing sulphuric-acid content.

0113649

COMPLEX CONCENTRATE

AGGLOMERATION 1

ARSENIC MERCURY

GAS CLEANSING 3

ROASTING 2

AIR

SULPHURIC ACID
ZINC SULPHATE

SULPHURIC ACID

SULPHATING (OXIDIZING) 4

SULPHURIC ACID

AIR

SULPHURIC ACID
ZINC SULPHATE

LEACHING I 5

SEPARATION 7

SILVER
COPPER

FILTRATION 6

SULPHATE SOLUTION

ELECTROLYSIS 8 9

ZINC

LEACHING RESIDUE

LEACHING II 10

LEAD

GOLD

SILVER

IRON OXIDE

CRUDE IRON          DUMPING

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 069 041   (GÖRLING et al.)<br><br>* Column 4 line 35 - column 7, line 12 *<br><br>--- | 1-2, 8-9 | C 22 B  3/00<br>C 22 B 11/04<br>C 22 B 13/04 |
| Y | US-A-3 969 107   (LIPPERT et al.)<br>* Column 3, line 57 - column 4, line 2, example 1 *<br><br>--- | 1 | |
| Y | US-A-4 266 972   (REDONDO-ABAD et al.)<br>* Column 1, line 59 - column 2, line 8 *<br><br>--- | 1, 5 | |
| A | SE-B- 7907545-3, publ.no. 422 595<br>     (AB SVEMSL ALUNSKIFFERUTVECKLING) | | |

TECHNICAL FIELDS SEARCHED (Int. Cl. ³)

C 22 B  3/00

The present search report has been drawn up for all claims

| Place of search | Date of completion of the search | Examiner |
|---|---|---|
| STOCKHOLM | 24-02-1984 | CARLERUD J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82